(19) Europäisches Patentamt
European Patent Office
Office européen des brevets

(11) Veröffentlichungsnummer: **0 336 212 B1**

(12) **EUROPÄISCHE PATENTSCHRIFT**

(45) Veröffentlichungstag der Patentschrift: **18.05.94**

(51) Int. Cl.⁵: **C08F 212/08**, C08F 220/54, //(C08F212/08,220:54,220:44), (C08F220/54,212:08,220:44)

(21) Anmeldenummer: **89105095.7**

(22) Anmeldetag: **22.03.89**

(54) **Wärmeformbeständige, thermoplastische Formmasse, enthaltend ein Copolymerisat, Verfahren zur Herstellung der Formmasse und ihre Verwendung.**

(30) Priorität: **31.03.88 DE 3811055**
**31.03.88 DE 3811054**

(43) Veröffentlichungstag der Anmeldung:
**11.10.89 Patentblatt 89/41**

(45) Bekanntmachung des Hinweises auf die Patenterteilung:
**18.05.94 Patentblatt 94/20**

(84) Benannte Vertragsstaaten:
**BE CH ES FR GB IT LI NL**

(56) Entgegenhaltungen:
**GB-A- 546 459**
**GB-A- 1 354 289**

(73) Patentinhaber: **BASF Aktiengesellschaft**
**Carl-Bosch-Strasse 38**
**D-67063 Ludwigshafen(DE)**

(72) Erfinder: **Baumgartner, Ehrenfried, Dr.**
**Goethestrasse 1**
**D-6701 Roedersheim-Gronau(DE)**
Erfinder: **Echte, Adolf, Prof. Dr.**
**Leuschnerstrasse 42**
**D-6700 Ludwigshafen(DE)**
Erfinder: **Mertes, Jürgen, Dr.**
**Rheingoenheimer Strasse 57**
**D-6700 Ludwigshafen(DE)**

EP 0 336 212 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine wärmeformbeständige thermoplastische Formmasse, nämlich ein Copolymerisat aus Styrol, gegebenenfals Acrylnitril und einem N-substituierten Amid der Methacrylsäure.

Zum Stand der Technik werden genannt

(1) US-A 2 311 548

(2) DE-C 12 54 287

(3) Zhurnal Prikladnoi Spektroskopij, Vol. 15, No. 2, 229-302

(4) JA 61 247 716 und

(5) GB-A 1 354 289

Wärmeformbeständige thermoplastische Formmassen auf Basis des Monomeren Styrol werden technisch bisher entweder durch Copolymerisation von Styrol mit Maleinsäureanhydrid und/oder Maleinsäure-N-(aryl)-/(alkyl)-imiden oder durch Abmischen mit anderen Polymeren, wie Polyphenylenether, hergestellt.

Die Polymerisationsparameter von Styrol und z.B. Maleinsäureanhydrid erlauben keine statistische Copolymerisation, so daß deren Herstellung in der Technik nur unter erschwerten Bedingungen möglich ist.

Das Abmischen von Polystyrol mit anderen Polymeren ist mit kostenaufwendigen Sekundärkonfektionierungen verbunden und liefert Polymermischungen mit dem Nachteil einer geringen Bindenahtfestigkeit oder bei der Verarbeitung auftretenden Entmischungserscheinungen, welche die mechanischen Eigenschaften beträchtlich verrringern können.

In (1), (2) und (3) werden Styrol/N-Methylmethacrylamid-Copolymerisate beschrieben, die einen Styrolgehalt von 80 % und mehr aufweisen. Während (2) die Verwendung dieser Copolymerisate für Abmischungen mit Polypropylen zur besseren Anfärbbarkeit von Polypropylenfasern zum Gegenstand hat, sind in (3) spektroskopische Daten beschrieben.

In (4) wird eine Emulsion eines Styrol/N-Isopropylmethacrylamid-Copolymerisats (80/20) beschrieben, die bei höherer Temperatur eine höhere Lichtdurchlässigkeit als bei tiefer Temperatur zeigt. Die Emulsion wird in schmutzabweisenden Anstrichmitteln verwendet. In (5) werden Styrol/N-Cycloalkyl substituierte Acrylamid-Copolymerisate beschrieben, die beispielhaft 80 bis 98 Gew.% Styrol aufweisen sollen, um den Vicatwert von Homopolystyrol zu verbessern.

Die in (5) beschriebenen Copolymerisate aus Styrol und Phenylacrylamid weisen eine Vicatzahl im Bereich von ca. 98 bis 118 °C auf und liegen somit im Bereich, den die eingangs geschilderten technisch zugänglichen und erprobten Copolymerisate auf Basis von MSA oder Maleinimid aufweisen.

Es bestand daher die Aufgabe, Copolymerisate vorzuschlagen, die höhere Vicat-Temperaturen aufweisen, die problemlos herzustellen sind und beständiger gegen Chemikalien sind als Polystyrol oder dessen Copolymerisat mit z.B. MSA, Acrylamiden und Maleinimid. Weiterhin sollten die Copolymerisate eine gute Fließfähigkeit in der Schmelze haben, um auch komplizierte Spritzgußteile herstellen zu können.

Diese Aufgabe wird gelöst durch eine Formmasse, die im wesentlichen ein Copolymerisat aus den einpolymerisierten Monomeren Styrol, Acrylnitril und einem N-substituierten Amid der Methacrylsäure enthält, wobei diese Monomeren in folgenden Mengenverhältnissen zur Polymerisation verwendet werden:

a) 1 bis 95 Gew.% Styrol,

b) 1 bis 40 Gew.% Acrylnitril und

c) 5 bis 98 Gew.% eines Amids der Methacrylsäure der Formel I

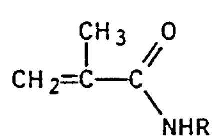

(I),

wobei R steht für einen primären, sekundären oder tertiären Alkylrest, Cycloalkylrest, Arylrest oder Aralkylrest mit 1 bzw. 6 bzw. 7 bis 12 C-Atomen, mit der Maßgabe, daß für Methyl oder Isopropyl als Alkylrest das Copolymerisat einen Styrolgehalt von weniger als 75 Gew.% aufweist.

Durch Copolymerisation von Styrol-Acrylnitril mit N-substituiertem Methacrylamid werden Formmassen erhalten, deren Glastempertur erheblich über derjenigen von Polystyrolacrylnitril (SAN) liegt.

Ein weiterer Vorteil der erfindungsgemäßen Formmasse ist ihre ebenfalls erhöhte Chemikalienbeständigkeit, die sich z.B. in der Unlöslichkeit in Methylenchlorid bemerkbar macht. Außerdem ist die vergleichsweise bedeutend bessere Verarbeitbarkeit (höherer MFI) zu erwähnen.

Die Formmasse enthält ein Terpolymerisat aus Styrol, Acrylnitril und mindestens einem N-substituierten Methacrylamid, wobei Styrol (a), Acrylnitril (b) und N-substituiertes Methacrylamid (c) am Aufbau des

Terpolymerisats in folgenden prozentualen Gewichtsanteilen, jeweils bezogen auf a) + b) + c), beteiligt sind:

a) 1-94 Gew.%, vorzugsweise 25 bis 75 Gew.%, insbesondere 29-72 Gew.%
b) 1-40 Gew.%, vorzugsweise 5 bis 25 Gew.%, insbesondere 8-25 Gew.%
a) 5-98 Gew.%, vorzugsweise 2 bis 65 Gew.%, insbesondere 8-62 Gew.%

Bezogen auf 100 Gew.-Teile des Terpolymerisats können in der Formmasse 0,01 bis 50 Gew.-Teile üblicher Zusatzstoffe vorhanden sein.

Aufbau des Terpolymerisats

Das Terpolymerisat enthält die Monomeren a) und c) in statistischer Verteilung einpolymerisiert. Als Monomeres a) kommt vorzugsweise Styrol in Frage.

Die Verwendung von α-Methylstyrol oder p-Methylstyrol anstelle von Styrol ist auch möglich, aber nicht bevorzugt.

Als Monomeres c) wird ein Amid der Methacrylsäure der Formel (I) verwendet,

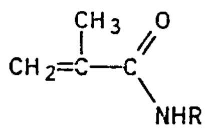

(I)

wobei R steht für primäre, sekundäre oder tertiäre Alkylreste, Cycloalkylreste, Arylreste oder Aralkylreste mit jeweils bis 12 C-Atomen.

Bevorzugt werden die Reste Methyl, Ethyl, Isopropyl, tert.-Butyl, Cyclohexyl, Benzyl oder Phenyl.

Herstellung der erfindungsgemäßen Formmasse

Die Herstellung der erfindungsgemäßen Formmasse kann durch radikalisch oder thermisch initiierte Polymerisation kontinuierlich oder diskontinuierlich erfolgen. Diese Polymerisation kann in Masse (Lösung), Masse-Suspension, Emulsion oder in Suspension erfolgen.

Bei einer thermischen Initiierung wird z.B. eine Monomerenmischung in einem kontinuierlich durchflossenen gerührten Kessel auf 150 °C erhitzt und bei dieser Temperatur bis zu Umsätzen von ca. 40 bis 50 % polymerisiert. Die entstehende Polymerisationswärme kann durch Siedekühlung des Styrols (Sdp. 146 °C) abgeführt werden. Ebenso ist ein Kreislauf des Polymersirups durch außerhalb des Kessels liegende Wärmetauscher möglich, in denen dann die Polymerisationswärme abgeführt werden kann.

Der ca. 45 Gew.% Copolymerisat enthaltende Polymersirup kann bei Temperaturen von 230 bis 300 °C in Entgasungseinheiten, wie sie aus US 2 941 986 bekannt sind, oder in üblichen Entgasungsextrudern in nicht umgesetzte Monomere und Polymerschmelze aufgetrennt werden. Die zurückerhaltenen Monomeren können dem Polymerisationskessel wieder zugeführt werden.

Eine radikalische Initiierung der Copolymerisation mit z.B. Perestern, Acylperoxiden, Peroxiden, Peroxydicarbonaten oder Azostartern, wie AIBN, ermöglicht niedrigere Polymerisationstemperaturen. So kann durch kontinuierliche Dosierung von tert.-Butylperpivalat zum Polymerisationskessel bereits bei 80 °C ein Polymerumsatz von 45 % erreicht werden. Die Einstellung des Molekulargewichts kann u.a. durch Verwendung von Mercaptanen beeinflußt werden. Die Aufarbeitung des Polymersirups erfolgt in gleicher Weise wie bei der thermischen Fahrweise.

Der Einsatz von Lösungsmitteln, von denen hier nur einige Erwähnung finden, wie z.B. Ethylbenzol, Toluol, Xylol, Cumol, Aceton, Methylethylketon oder Tetrahydrofuran, erlaubt einen höheren Polymerisationsumsatz im Reaktionskessel ohne daß die Viskositäten des Reaktionsansatzs unbeherrschbar hoch werden. Lösungsmittel können sowohl bei der thermischen als auch Starter-Fahrweise eingesetzt werden.

Die Masse-Suspensionspolymerisation wird vor allem diskontinuierlich ausgeführt. Bis zu einem Polymerumsatz von 30 bis 40 % erfolgt die Polymerisation in Masse entweder durch thermische Initiierung bei 120 bis 155 °C oder durch radikalische Fahrweise bei 60 bis 130 °C. Nach Erreichen des angegebenen Umatzes werden zu 2 l Polymersirup 2 g Dicumylperoxid und eine Lösung aus 2 l Wasser, 50 g Polyvinylalkohol, 18 g Polyvinylpyrrolidon und 1,8 g $Na_4P_2O_7$ gegeben und nach folgendem Temperaturprogramm bis zu einem Umsatz von 98 bis 100 % weiterpolymerisiert:

3 Stunden bei 110 °C
3 Stunden bei 130 °C
3 Stunden bei 150 °C

3 Stunden bei 180 °C.

Die Suspensionspolymerisation kann in üblicher Weise mit Schutzkolloid durchgeführt werden. Die Monomeren werden gemeinsam mit Wasser, Natriumpyrophosphat, tert.-Butylperbenzoat, Benzoylyperoxid und tert.-Dodecylmercaptan eingewogen; der Kessel mit $N_2$ gespült und innerhalb einer halben Stunde unter Rühren bei 300 Umdrehungen pro Minute auf 80 °C aufgeheizt. Der Reaktionsansatz wird 3 Stunden bei dieser Temperatur gehalten, dann werden Polyvinylpyrrolidin und Polyvinylalkohol, gelöst in Wasser, zugesetzt und die Polymerisation für 2 Stunden bei 90 °C fortgesetzt. Anschließend wird noch 2 Stunden bei 130 °C, 2 Stunden bei 150 °C und 2 Stunden bei 180 °C polymerisiert. Nach dem Abkühlen werden die Perlen gesiebt, gewaschen und getrocknet.

Für die Emulsionspolymerisation werden die Monomeren Wasser, Natriumdodecylsulfonat und Kaliumperoxodisulfat mit einem Ultraturrax vordispergiert. Die Emulsion wird in einen Kessel, der mit Rührer, Rückflußkühler, Thermometer und Stickstoffanschluß ausgestattet ist, gefüllt und die Luft durch Stickstoff verdrängt. Dann wird unter langsamem Rühren im Wasserbad auf 70 °C aufgeheizt und nach den Anspringen der Polymerisation weitere 3 Stunden bei 70 °C polymerisiert. Anschließed wird die Dispersion bei 80 °C polymerisiert. Nach dem Abkühlen wird die Dispersion mit Essigsäure koaguliert, das Polymere in einer Zentrifuge abgetrennt, gewaschen und als feuchte Masse einem Entgasungsextruder zugeführt. Das Restwasser und nicht umgesetztes Monomeres können hier abgezogen werden. Die Polymerschmelze wird aus einem Düsenkopf in Strängen ausgefahren und diese in Zylinder granuliert.

Bei den einzelnen Verfahren werden die für die Herstellung von SAN-Copolymerisaten oder den aus (2) bis (5) bekannten Copolymerisaten bekannten üblichen Hilfsmittel, wie Starter, Regler, Emulgatoren, Schutzkolloide in übliche Mengen angewendet.

Schon während der Polymerisation oder danach können übliche Zusatzstoffe angewendet werden. Als Zusatzstoffe seien genannt: Schmiermittel, Entformungsmittel, Antioxidantien, Antistatika, Pigmente, Farbstoffe, Füllstoffe, wie Glas- und Kohlenstoff-Fasern oder Metalle in Flocken-, Pulver- oder Faserform und Flammschutzmittel.

Es ist auch möglich, die erfindungsgemäße Formmasse mit weiteren Thermoplasten abzumischen oder gegebenenfalls Formteile bzw. Verbunde mit anderen Thermoplasten herzustellen. Die Auswahl des Thermoplasten richtet sich nach dem Fachmann bekannten Anwendungsgebiet.

Die Einarbeitung der Zusatzstoffe nach der Polymerisation erfolgt dabei durch übliches Mischen bei Temperaturen von 200 bis 300 °C auf üblichen Mischern, Knetern, Walzen oder Extrudern.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach erfindungsgemäßen Verfahren hergestellte Formmassen Formteile durch Spritzgießen für Behälter und Deckel für Küchengeräte, Instrumentenabdeckungen für die Kfz-Industrie und Leuchtenabdeckungen hergestellt.

Bevorzugt wird die erfindungsgemäße Formmasse angewendet für die Herstellung von Formteilen, die mit Flüssigkeiten oder Gasen bei hohen Temperaturen in Berührung kommen, z.B. Rohre für heiße Abwässer oder heiße Flüssigkeiten. die Temperaturen bis 150 ja 170 °C aufweisen. Auch eine Anwendung für Behälter für Mikrowellengeräte ist möglich.

Die hier beschriebenen Parameter wurden wie folgt bestimmt:

1. Die Glastemperatur, Tg, nach der DSC-Methode;
(Tm-Wert nach ASTM D 3418-82)
2. Die Viskositätszahl, VZ, nach DIN 53726, gemessen 0,5 %ig in Dimethylformamid bei 23 °C;
3. Der Schmelzflußindex, MFI, nach DIN 53735 bei 200 °C und 21,6 kp Belastung in g/10 min.

Die für die Durchführung der in den Beispielen beschriebenen Polymerisationen erforderlichen Monomeren b) wurden durch Umsetzung von Methacrylsäure (Ester, Chlorid, Anhydrid) mit primären oder sekundären Aminen erhalten. US 2 311 548 beschreibt die Herstellung N-substituierter Methacrylamide durch die Reaktion von Methacrylsäurechlorid mit primären oder sekundären Aminen. Auch durch Reaktion von Methacrylsäureanhydrid mit primären oder sekundäre Aminen können N-substituierte Methacrylamide hergestellt werden, s. DE-OS 3 430 445. In DE-OS 3 130 508 wird die Amidierung von Methacrylsäure mit Aminen bei höheren Temperaturen unter Entfernen des entstehenden Reaktionswasser beschrieben. Umamidierungen von Methacrylsäuremethylester mit Aminen unter Verwendung verschiedener Katalysatoren werden in DE-OS 2 816 516 und 3 123 970 als Verfahren zur Herstelung von N-substituierten Methacrylamiden genannt.

Die Erfindung wird durch die nachfolgenden Beispiele und mehrere Vergleichsversuche näher erläutert. Die in den Beispielen genannten Teile und Prozente beziehen sich, sofern nicht anders angegeben, auf das Gewicht.

Beispiele 1 bis 30 und Vergleichsversuche I und II

Die in den Tabellen 1 bis 6 beschriebenen Terpolymerisate wurden in einem Druckreaktor in Masse hergestellt.

Die N-substituierten Methacrylamide wurden bei 60 °C in den angegebenen Mengen Styrol/Acrylnitril gelöst und mit jeweils 0,2 Gew.-Teilen Benzoylperoxid, 0,1 Gew.-Teil Dicumylperoxid und 0,3 Gew.-Teilen tert.-Dodecylmercaptan versetzt. 20 ml dieser Lösung wurde in einen Druckreaktor gefüllt, dieser abwechselnd mit Stickstoff gespült und im Vakuum entgast. Anschließend wurde unter Stickstoffatmosphäre bis zu Umsätzen >95 % polymerisiert. Die Polymerisation erfolgte für 48 Stunden bei 80 °C, 8 Stunden bei 120 °C und 8 Stunden bei 170 °C.

Von den in Methylenchlorid löslichen Terpolymeren wurden 10 %ige Lösungen angefertigt, die Polymeren mit dem 5-fachen überschuß Ethanol ausgefällt und nach dem Filtrieren bei 150 °C 12 Stunden lang im Vakuum getrocknet. Die Tg-Messungen (DSC-Methode) wurden an bei 200 °C hergestellten Rundscheiben vorgenommen.

In Methylenchlorid unlösliche Terpolymere wurden in einer Trockenpistole (213 °C/10 Torr/40 min) von Restmonomeren befreit. Die Tg-Messung erfolgte auch hier an bei 200 °C hergestellten Rundscheiben.

In die Tabellen sind die Zusammensetzung, die Glastemperatur (Tg) als Maß für die Wärmeformbeständigkeit, die Viskositätszahlen bzw. Schmelzfließindices der Terpolymerisate mit aufgenommen worden.

Die Tabelle 7 gibt die höhere Fließfähigkeit eines Terpolymerisats aus Styrol-Acrylnitril-N-Methylmethacrylamid (Versuch C) gegenüber Terpolymerisaten aus Styrol-Acrylnitril-Maleinsäureanhydrid oder N-Phenylmaleinimid (Versuche A + B) wieder, deren Glastemperatur jeweils auf ca. 120 °C eingestellt wurde.

Die Maleinsäureanhydrid- und N-Phenylmaleinimid-Terpolymerisate wurden in einer Lösungspolymerisation in einem kontinuierlich durchflossenen gerührten Kessel hergestellt.

Tabelle 1: Terpolymere
Styrol - Acrylnitril - N-Methylmethacrylamid

| Beispiel | Styrol (Gew.-Tl.) | Acrylnitril (Gew.-Tl.) | N-Methylmeth-acrylamid (Gew.-Tl.) | Tg nach DSC (°C) | Löslichkeit in Methylenchlorid (10 %ig) | VZ | MFI |
|---|---|---|---|---|---|---|---|
| 1 | 71 | 24 | 5 | 116 | löslich | 63,1 | 20,2 |
| 2 | 67,4 | 22,6 | 10 | 118 | löslich | 57,0 | 19,6 |
| 3 | 60 | 20 | 20 | 121 | schwer löslich | - | 17,5 |
| 4 | 52,4 | 17,6 | 30 | 124 | unlöslich | - | 12,7 |
| 5 | 45 | 15 | 40 | 127 | unlöslich | - | 9,1 |
| 6 | 30 | 10 | 60 | 131 | unlöslich | - | 6,8 |
| Vergleichs-versuch I | 75 | 25 | - | 109 | löslich | 77,2 | 21,3 |
| Vergleichs-versuch II | 60 | 20 | 20* | 111 | löslich | 39,4 | 18,8 |

*N-tert.-Butylacrylamid gemäß Druckschrift (1)

Tabelle 2: Terpolymere
Styrol - Acrylnitril - N-Cyclohexylmethacrylamid

| Beispiel | Styrol (Gew.-Tl.) | Acrylnitril (Gew.-Tl.) | N-Cyclohexyl-methacrylamid (Gew.-Tl.) | Tg nach DSC (°C) | Löslichkeit in Methylenchlorid (10 %ig) | VZ | MFI |
|---|---|---|---|---|---|---|---|
| 7 | 67,4 | 22,6 | 10 | 119 | löslich | 75,6 | 20,7 |
| 8 | 60 | 20 | 20 | 121 | löslich | 71,9 | 18,4 |
| 9 | 52,4 | 17,6 | 30 | 125 | löslich | 66,8 | 16,3 |
| 10 | 45 | 15 | 40 | 127 | löslich | 60,6 | 15,1 |
| 11 | 30 | 10 | 60 | 130 | löslich | 57,3 | 13,4 |

Tabelle 3: Terpolymere
Styrol - Acrylnitril - N-Benzylmethacrylamid

| Beispiel | Styrol (Gew.-Tl.) | Acrylnitril (Gew.-Tl.) | N-Benzyl-methacrylamid (Gew.-Tl.) | Tg nach DSC (°C) | Löslichkeit in Methylenchlorid (10 %ig) | VZ | MFI |
|---|---|---|---|---|---|---|---|
| 12 | 71 | 24 | 5 | 112 | löslich | 36,5 | - |
| 13 | 67,4 | 22,6 | 10 | 114 | löslich | 41,1 | - |
| 14 | 63,8 | 21,2 | 15 | 116 | löslich | 36,5 | - |
| 15 | 60 | 20 | 20 | 116 | löslich | 35,6 | - |
| 16 | 56,2 | 18,8 | 25 | 117 | löslich | 32,3 | - |

Tabelle 4: Terpolymere
Styrol - Acrylnitril - N-Tert.-Butylmethacrylamid

| Beispiel | Styrol (Gew.-Tl.) | Acrylnitril (Gew.-Tl.) | N-Tert.-Butyl-methacrylamid (Gew.-Tl.) | Tg nach DSC (°C) | Löslichkeit in Methylenchlorid (10 %ig) | VZ | MFI |
|---|---|---|---|---|---|---|---|
| 17 | 67,4 | 22,6 | 10 | 118 | löslich | 72,5 | - |
| 18 | 60 | 20 | 20 | 120 | löslich | 69,2 | - |
| 19 | 52,4 | 17,6 | 30 | 121 | löslich | 52,2 | - |
| 20 | 45 | 15 | 40 | 125 | löslich | 41,3 | - |
| 21 | 30 | 10 | 60 | 136 | löslich | 37,5 | - |

Tabelle 5: Terpolymere
Styrol - Acrylnitril - N-Isopropylmethacrylamid

| Beispiel | Styrol (Gew.-Tl.) | Acrylnitril (Gew.-Tl.) | N-Isopropyl-methacrylamid (Gew.-Tl.) | Tg nach DSC (°C) | Löslichkeit in Methylenchlorid (10 %ig) | VZ | MFI |
|---|---|---|---|---|---|---|---|
| 22 | 67,4 | 22,6 | 10 | 110 | löslich | 81,9 | - |
| 23 | 60 | 20 | 20 | 115 | löslich | 74,9 | - |
| 24 | 52,4 | 17,6 | 35 | 119 | löslich | 70,7 | - |
| 25 | 45 | 15 | 40 | 125 | löslich | 56,5 | - |
| 26 | 30 | 10 | 60 | 128 | löslich | 45,3 | - |

Tabelle 6: Terpolymere
Styrol - Acrylnitril - N-Phenylmethacrylamid

| Beispiel | Styrol (Gew.-Tl.) | Acrylnitril (Gew.-Tl.) | N-Phenylmethacrylamid (Gew.-Tl.) | Tg nach DSC (°C) | Löslichkeit in Methylenchlorid (10 %ig) | VZ (ml/g) | MFI |
|---|---|---|---|---|---|---|---|
| 27 | 67,5 | 22,5 | 10 | 112 | löslich | 99,5 | 19,7 |
| 28 | 52,6 | 17,4 | 30 | 123 | löslich | 87,5 | 18,4 |
| 29 | 45 | 15 | 40 | 128 | unlöslich | - | 17,1 |
| 30 | 30 | 10 | 60 | 135 | unlöslich | - | 15,8 |

Tabelle 7: Vergleich der Fließfähigkeiten verschiedener Styrol-Terpolymerisate

| Versuche | Art des Terpolymeren | Zusammensetzung des Terpolymeren (Gew.-Tl.) | Tg (°C) | VZ | MFI |
|---|---|---|---|---|---|
| A | Styrol-Acrylnitril-MSA | 67,6/22,4/10 | 122 | 80,2 | 3,0 |
| B | Styrol-Acrylnitril-PMI | 68/10/22 | 124 | 74,7 | 4,7 |
| C | Styrol-Acrylnitril-N-MMAA | 52,4/17,6/30 | 124 | - | 12,7 |

MSA = Maleinsäureanhydrid
PMI = N-Phenylmaleinimid
N-MMAA = N-Methylmethacrylamid

## Patentansprüche

**1.** Wärmeformbeständige thermoplastische Formmasse, enthaltend ein Copolymerisat aus Styrol, Acrylnitril und einem Amid der Methacrylsäure, dadurch gekennzeichnet, daß das Copolymerisat im wesentlichen enthält

a) 1 bis 95 Gew.% Styrol
b) 1 bis 40 Gew.% Acrylnitril und

c) 5 bis 98 Gew.% eines Amids der Methacrylsäure der Formel I

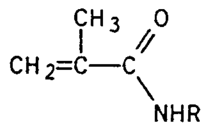

(I),

wobei R steht für einen primären, sekundären oder tertiären Alkylrest, Cycloalkylrest, Arylrest oder Aralkylrest mit 1 bzw. 6 bzw. 7 bis 12 C-Atomen, mit der Maßgabe, daß für Methyl oder Isopropyl als Alkylrest das Copolymerisat einen Styrolgehalt von weniger als 75 Gew.% aufweist.

**2.** Formmasse nach Anspruch 1, dadurch gekennzeichnet, daß die Formmasse, bezogen auf 100 Gew.-Teile des Copolymerisats, 0,01 bis 50 Gew.-Teile üblicher Zusatzstoffe aufweist.

**3.** Formmasse nach Anspruch 1, dadurch gekennzeichnet, daß für den Fall, daß R Methyl oder Isopropyl bedeutet, der Styrolgehalt 10 bis 70 Gew.% beträgt.

**4.** Formmasse nach Anspruch 1 bzw. 3, dadurch gekennzeichnet, daß R Methyl, Ethyl, Isopropyl, tert.-Butyl, Cyclohexyl, Phenyl oder Benzyl bedeutet.

## Claims

**1.** A heat distortion resistant thermoplastic molding material comprising a copolymer of styrene, acrylonitrile, and an amide of methacrylic acid, wherein the copolymer essentially contains

a) from 1 to 95% by weight of styrene,
b) from 1 to 40% by weight of acrylonitrile and
c) from 5 to 98% by weight of an amide of methacrylic acid of the formula I

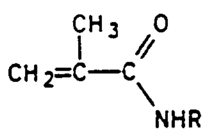

(I)

where R is a primary, secondary or tertiary alkyl radical, cycloalkyl radical, aryl radical or aralkyl radical of 1 or 6 or 7, respectively, to 12 carbon atoms, with the proviso that, when alkyl is methyl or isopropyl, the copolymer has a styrene content of less than 75% by weight.

**2.** A molding material as claimed in claim 1, which includes from 0.01 to 50 parts by weight of conventional additives per 100 parts by weight of copolymer.

**3.** A molding material as claimed in claim 1, wherein, when R is methyl or isopropyl, the styrene content is from 10 to 70% by weight.

**4.** A molding material as claimed in claim 1 or 3, wherein R is methyl, ethyl, isopropyl, tert-butyl, cyclohexyl, phenyl or benzyl.

## Revendications

**1.** Masse de moulage thermoplastique résistant à la chaleur, contenant un copolymère de styrène, d'acrylonitrile et d'un amide de l'acide méthacrylique, caractérisée en ce que le copolymère contient essentiellement

a) 1 à 95% en poids de styrène
b) 1 à 40% en poids d'acrylonitrile et

C) 5 à 98% en poids d'un amide de l'acide méthacrylique de formule I

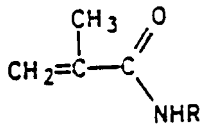

(I),

dans laquelle R est mis pour un reste alkyle primaire, secondaire ou tertiaire, un reste cycloalkyle, un reste aryle ou un reste aralkyle ayant 1, respectivement 6, respectivement 7 à 12 atomes de carbone, à condition que pour le groupement méthyle ou le groupement isopropyle en tant que reste alkyle, le copolymère présente une teneur en styrène de moins de 75% en poids.

2. Masse de moulage selon la revendication 1, caractérisée en ce que la masse de moulage présente, pour 100 parties en poids du copolymère, 0,01 à 50 parties en poids d'adjuvants usuels.

3. Masse de moulage selon la revendication 1, caractérisée en ce que, lorsque R représente un groupement méthyle ou isopropyle, la teneur en styrène est de 10 à 70% en poids.

4. Masse de moulage selon la revendication 1 ou 3, caractérisée en ce que R représente un groupement méthyle, éthyle, isopropyle, tert.-butyle, cyclohexyle, phényle ou benzyle.